(19) **Europäisches Patentamt**
**European Patent Office**
**Office européen des brevets**

(11) **EP 2 645 586 B1**

(12) **FASCICULE DE BREVET EUROPEEN**

(45) Date de publication et mention de la délivrance du brevet:
**09.12.2015 Bulletin 2015/50**

(51) Int Cl.:
*H04B 1/76* *(2006.01)*  *G10L 21/02* *(2013.01)*

(21) Numéro de dépôt: **13000913.7**

(22) Date de dépôt: **22.02.2013**

(54) **Procédé de transformation simultanée des signaux vocaux d'entrées d'un système de communication**

Simultanes Umwandlungsverfahren von Eingangssprachsignalen eines Kommunikationssystems

Method for concurrent conversion of input voice signals in a communication system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.03.2012 FR 1200920**

(43) Date de publication de la demande:
**02.10.2013 Bulletin 2013/40**

(73) Titulaire: **Airbus Helicopters**
**13725 Marignane Cedex (FR)**

(72) Inventeur: **Baudry, Jean-Pierre**
**83200 Toulon (FR)**

(74) Mandataire: **Pouillot, Laurent Pierre Paul**
**GPI & Associés**
**1330, Rue Guillibert de la Lauzière**
**EuroParc de Pichaury, Bât B2**
**13856 Aix-en-Provence Cedex 3 (FR)**

(56) Documents cités:
**US-A- 5 438 623**

- **DOUGLAS BRUNGART ET AL: "DESIGN CONSIDERATIONS FOR IMPROVING THE EFFECTIVENESS OF MULTITALKER SPEECH DISPLAYS", PROCEEDINGS OF THE 2002 INTERNATIONAL CONFERENCE ON AUDITORY DISPLAY, 2 juillet 2002 (2002-07-02), XP055045537,**
- **BARRY ARONS: "A Review of The Cocktail Party Effect", JOURNAL OF THE AMERICAN VOICE I/O SOCIETY, vol. 12, 1 janvier 1992 (1992-01-01), pages 35-50, XP055045544,**
- **HONG JUN SONG ET AL: "Aesthetic and auditory enhancements for multi-stream information sonification", PROCEEDINGS OF THE 3RD INTERNATIONAL CONFERENCE ON DIGITAL INTERACTIVE MEDIA IN ENTERTAINMENT AND ARTS, 1 janvier 2008 (2008-01-01), pages 224-231, XP055045547,**
- **Todd Nelson ET AL: "Monitoring the Simultaneous Presentation of Spatialized Speech Signals in a Virtual Acoustic Environment", Defense Technical Information Center OAI-PMH Repository (United States), 1 juin 1998 (1998-06-01), XP055045550, Extrait de l'Internet: URL:http://www.dtic.mil/cgi-bin/ GetTRDoc?L ocation=U2&doc=GetTRDoc.pdf&AD=ADA4302 84 [extrait le 2012-11-26]**

EP 2 645 586 B1

**Description**

La présente invention se situe dans le domaine des systèmes de communication. Elle concerne un procédé de transformation simultanée des signaux vocaux d'entrée d'un système de communication. Ce procédé est plus particulièrement destiné aux systèmes de communication présents dans les aéronefs.

A ce jour, dans le domaine aéronautique en général, et dans le domaine des aéronefs à voilure tournante plus particulièrement, un pilote est amené à utiliser le système de communication de l'aéronef pour dialoguer avec de multiples interlocuteurs, qu'ils soient extérieurs à l'aéronef ou bien à l'intérieur de l'aéronef.

En effet, le pilote est amené à communiquer avec les contrôleurs aériens des différentes tours de contrôle qui gèrent et organisent le trafic aérien des aéronefs, ainsi qu'avec les pilotes d'autres aéronefs ou bien des interlocuteurs se trouvant au sol, sur un bateau, sur une plateforme pétrolière, par exemple.

Le système de communication d'un aéronef peut réceptionner plusieurs signaux vocaux, chaque signal étant composé d'ondes d'une fréquence de réception donnée. Chaque signal vocal réceptionné est alors transmis au pilote par le système de communication sous la forme de la voix de son interlocuteur. On entend par signal vocal d'entrée un signal réceptionné par le système de communication et correspondant à la voix d'un interlocuteur du pilote.

Par exemple, on connait les systèmes HF, VHF ou bien UHF, HF correspondant aux initiales de la désignation en langue anglaise « High Frequencies », de même VHF correspondant à « Very High Frequencies » et UHF à « Ultra High Frequencies ».

Pour effectuer ce type de communication, le pilote définit, par un moyen de réglage adapté sur le système de communication, une ou plusieurs fréquences de réception. Chaque fréquence de réception correspond à la fréquence des ondes composant chaque signal vocal correspondant aux voix des interlocuteurs du pilote.

On utilisera pour la suite de la description les termes « fréquence de réception du signal » pour désigner plus simplement la fréquence des ondes composant le signal réceptionné.

Le pilote communique également avec des personnes qui sont à bord de l'aéronef, tels qu'un copilote, un navigateur ou tout autre passager de l'aéronef. Le système de communication permettant ces communications est parfois désigné par les termes « téléphone de bord ».

Aujourd'hui, les systèmes de communication présents sur les aéronefs permettent de recevoir simultanément des signaux de plusieurs fréquences de réception, permettant ainsi de communiquer simultanément avec plusieurs interlocuteurs tels qu'un contrôleur aérien ou le pilote d'un autre aéronef. De plus, les passagers de l'aéronef peuvent utiliser le même système de communication, via le téléphone de bord, pour communiquer entre eux et avec le pilote de l'aéronef.

De fait, un problème survient lorsque plusieurs interlocuteurs, qu'ils soient externes ou internes à l'aéronef, s'adressent, tout ou partie, au pilote de façon simultanée. En effet, les voix des interlocuteurs sont alors superposées, diminuant significativement leur intelligibilité et compliquant la compréhension des messages.

Par ailleurs, lorsque le pilote est déjà en communication avec un interlocuteur, un autre message réceptionné sur une autre fréquence de réception, peut être difficile à comprendre, voire inaudible. Ce message, susceptible d'être important, provenant par exemple d'un contrôleur aérien demandant au pilote de l'aéronef de se dérouter, sera alors mal compris, voire pas compris, et donc pas pris en compte par le pilote de l'aéronef.

Pour pallier à ces problèmes avec les systèmes de communication actuels, le pilote d'un aéronef peut augmenter manuellement le volume sonore associé à la fréquence de réception d'un signal qui correspond au message mal compris. Inversement, le pilote peut baisser le volume sonore associé aux fréquences de réception correspondant aux messages considérés comme non prioritaires.

Dans ces deux cas, le pilote lâche temporairement les commandes de vols afin de modifier le volume sonore associé à la fréquence ou les fréquences de réception des signaux correspondants, ce qui peut s'avérer dangereux suivant les conditions de vol. De plus, le temps d'effectuer ce changement de volume sonore, une partie ou la totalité du message peut avoir été mal compris, voire non compris, par le pilote. Ceci peut s'avérer dangereux suivant l'importance du message, notamment si une manoeuvre ou une intervention du pilote est nécessaire très rapidement.

Enfin, le pilote peut demander la répétition du message non compris ou mal compris à son interlocuteur. Là encore, ceci peut s'avérer dangereux si une manoeuvre ou une intervention du pilote est nécessaire très rapidement.

Dans tous les cas, la réactivité du pilote est dégradée par la mauvaise ou la non compréhension du message réceptionné, la perte de temps ainsi générée pouvant se révéler dangereuse si le message est particulièrement important et une action rapide nécessaire.

Toutefois si l'aéronef est équipé d'un système de spatialisation des communications, la compréhension des différents messages superposés peut être facilitée. Par exemple selon le document US5438623, un tel système permet de transmettre les messages réceptionnés, en donnant l'impression qu'ils proviennent de sources différentes placées à des endroits différents de l'espace entourant le pilote. Par contre, il n'y a aucune priorité entre les différents messages en fonction des interlocuteurs tels qu'un contrôleur aérien. En effet, il n'y a aucune transformation du signal, mais uniquement un décalage dans le temps de la perception du message donnant cette impression de décalage de la source de la voix correspondante dans l'espace.

Cependant à partir de 3 ou 4 messages simultanés, le pilote se trouve de nouveau dans une superposition de voix dont la compréhension est très difficile, la spatialisation n'étant plus suffisante pour améliorer cette situation.

Il existe également des systèmes qui permettent de pallier un défaut auditif de l'utilisateur. De tels systèmes, décrits dans les documents EP2138009 et US2002/0111796, permettent de modifier les caractéristiques d'une voix afin d'en faciliter la compréhension par un utilisateur ayant un défaut auditif. Les caractéristiques d'une voix, qui sont modifiées, sont le volume sonore ainsi qu'une ou plusieurs fréquences de la voix.

En effet, une voix peut se décomposer en différents sons, chaque son se caractérisant notamment par sa fréquence. Par exemple, un son avec une fréquence faible correspond à un son grave et un son avec une fréquence élevée à un son aigu.

De fait, en augmentant la fréquence d'un ou plusieurs sons composant cette voix, on peut la rendre plus aiguë, et par suite plus distinctive par certaines personnes.

Par contre, les systèmes décrits modifient une seule voix et sont incapables de traiter simultanément plusieurs signaux.

Par ailleurs, le document « Design considerations for improving the effectiveness of multitalker speech displays », du *Proceedings of the 2002 International Conference on Auditory Display, Kyoto, JP*, du 2 juillet 2002, décrit différentes caractéristiques contribuant à l'intelligibilité ou non de voix superposées lors de communications multi-interlocuteur, que ce soit les fonds sonores, le nombre d'interlocuteurs, la connaissance de l'interlocuteur, les caractéristiques intrinsèques à chaque voix, le niveau sonore de chaque voix ou bien la position spatiale de chaque voix. Ce document indique également que l'on peut modifier un ou plusieurs caractéristiques de voix afin d'améliorer leur intelligibilité, sans cependant divulguer comment modifier ces caractéristiques.

Il est à noter que l'arrière plan technologique contient les documents « A review of the Cocktail Party effect » du Journal of the American Voice I/O Society, de 1992, Vol 12, pages 35-50, « Aesthetic and auditory enhancements for multi-stream information sonification » du Proceedings of the 3rd International Conference on Digital Interactive Media Entertainment and Arts, de 2008, pages 224-231 *et* « Monitoring the simultaneous presentation of spatialized speech signals in a virtual acoustic environment » du Defense Technical Information center OAI-PMH Repository, US, d 1er juin 1998 ainsi que le document US 5438623.

On utilisera pour la suite de la description les termes « fréquence de la voix » pour désigner plus simplement la fréquence des sons composant la voix. Ces fréquences de la voix sont totalement distinctes et indépendantes de la fréquence de réception du signal correspondant à cette voix.

La présente invention a alors pour objet de proposer un procédé selon la revendication 1, et un système selon la revendication 12, permettant de s'affranchir des limitations mentionnées ci-dessus.

Selon l'invention, un procédé de transformation d'au moins deux signaux vocaux d'entrée d'un système de communication comprend une phase d'initialisation et une phase d'utilisation. Chaque signal vocal d'entrée est réceptionné selon une fréquence de réception spécifique et correspond à une voix d'un interlocuteur communiquant avec un utilisateur du système de communication.

Au cours de la phase d'initialisation, on affecte au moins deux transformations aux signaux vocaux d'entrée, chaque transformation étant associée à au moins une fréquence de réception des signaux vocaux d'entrée et étant distincte des autres transformations. Puis au cours de la phase d'utilisation, on applique simultanément ces transformations aux signaux vocaux d'entrée en fonction de leur fréquence de réception. Une fois transformés, les signaux vocaux sont dirigés vers une sortie du système de communication pour être transmis, par exemple, à un casque de l'utilisateur de ce système.

Ce procédé est remarquable en ce qu'il permet, lors de la phase d'utilisation, d'optimiser la perception par un utilisateur du système de communication des voix de ses interlocuteurs, qui correspondent à ces signaux vocaux d'entrée réceptionnés simultanément.

En effet, les transformations permettent de modifier au moins une caractéristique des signaux vocaux d'entrée, et par suite, au moins une caractéristique des voix des interlocuteurs de l'utilisateur du système de communication. Les caractéristiques d'une voix, qui sont modifiables, sont notamment le volume sonore ainsi que les fréquences de la voix.

De fait, la voix de chaque interlocuteur de l'utilisateur du système de communication est modifiée artificiellement par chaque transformation, facilitant ainsi leur perception, et par suite leur discrimination et leur compréhension, par l'utilisateur de ce système.

Par exemple, le volume sonore d'une première voix, correspondant à un premier signal vocal d'entrée selon une première fréquence de réception sera augmenté et une seconde voix, correspondant à un second signal vocal d'entrée selon une seconde fréquence de réception, sera modifiée pour être plus aiguë. Par ailleurs, une troisième voix pourra être modifiée pour avoir un rendu métallique.

Ces transformations permettent ainsi d'éviter que la superposition des voix réceptionnées simultanément rende impossible leur compréhension, en facilitant notamment leur discrimination.

En effet, une voix aiguë et une voix grave simultanées se distinguent plus facilement que deux voix aiguës.

De même, une voix avec un rendu métallique se distingue des autres voix. De fait, l'utilisateur du système de communication distingue, et par suite comprend, les voix de ses interlocuteurs, qui correspondent aux signaux vocaux réceptionnés par le système de communication.

Par ailleurs, chaque voix d'un interlocuteur correspond à un signal vocal d'entrée réceptionné à une fréquence de réception spécifique. De fait, en associant chaque transformation à au moins une fréquence de réception de ces signaux vocaux d'entrée, on affecte une seule transformation à chaque signal vocal d'entrée et par suite à chaque voix d'un interlocuteur de l'utilisateur du système de communication.

Par ailleurs, en associant une transformation à une fréquence de réception d'un signal vocal d'entrée, et par suite à une voix d'un interlocuteur, l'utilisateur est capable de donner la priorité à certains messages. En effet, en affectant une transformation spécifique à un signal provenant d'un interlocuteur susceptible de fournir un message important, l'utilisateur reconnaîtra immédiatement la transformation dès qu'il entendra la voix et il pourra se concentrer sur ce message qui peut être important. Par exemple, le pilote d'un aéronef peut affecter une augmentation du volume sonore à un message provenant d'un contrôleur aérien.

Le procédé peut de plus comporter une ou plusieurs caractéristiques supplémentaires.

Les voix des interlocuteurs de l'utilisateur du système de communication sont généralement réceptionnées par le système de communication sous la forme de signaux analogiques d'entrée. Un signal analogique est un signal dont la valeur varie de façon continue. Le procédé selon l'invention permet alors d'appliquer les transformations à ces signaux analogiques d'entrée afin de modifier au moins une caractéristique des voix des interlocuteurs de l'utilisateur du système de communication.

Cependant, il peut être intéressant de transformer ces signaux analogiques d'entrée en signaux numériques. En effet, un signal numérique se compose d'une succession de valeurs discontinues, issues du signal analogique. Ce signal numérique est alors plus facilement modifiable qu'un signal analogique, en appliquant différentes transformations aux valeurs successives le composant.

Selon le procédé de l'invention, on convertit alors ces signaux analogiques d'entrée en signaux numériques par l'intermédiaire d'au moins un convertisseur analogique-numérique. Ensuite, on applique les transformations à ces signaux numériques afin d'obtenir des signaux numériques transformés. Puis on convertit ces signaux numériques transformés en signaux analogiques transformés par l'intermédiaire d'un convertisseur numérique-analogique. Ces signaux analogiques transformés correspondent aux voix modifiées des interlocuteurs permettant ainsi à l'utilisateur du système de communication de les distinguer plus facilement.

Dans un mode de réalisation préféré de l'invention, le convertisseur analogique-numérique et le convertisseur numérique-analogique constituent un seul et même convertisseur capable de réaliser ces deux conversions. Par exemple, ce convertisseur est un « Codec ». Le mot « Codec » est un mot-valise, c'est à dire un néologisme formé par la fusion d'une partie d'au moins deux mots existants de sorte que « Codec » signifie en fait « Codage-décodage ». Un Codec est donc capable de coder un premier signal, par exemple convertir un signal analogique en signal numérique, et également de décoder un second signal, par exemple convertir un signal numérique en signal analogique. Un tel Codec peut être intégré à un circuit imprimé ou bien dans un logiciel par exemple, qui est intégré au système de communication.

Selon un mode de réalisation de l'invention, la phase d'initialisation du procédé de transformation, au cours de laquelle on affecte une transformation à chaque fréquence de réception des signaux vocaux d'entrée, peut être décomposée en plusieurs étapes.

Tout d'abord, on saisit les fréquences de réception des signaux vocaux d'entrée susceptibles d'être réceptionnés par le système de communication. Cette saisie est faite par l'intermédiaire d'un moyen de saisie, qui peut être intégré au système de communication ou bien être apte à lui être relié. Pour cela, on peut sélectionner ces fréquences de réception parmi une liste de fréquences de réception stockée dans un moyen de stockage ou bien saisir directement la valeur de la fréquence de réception souhaitée. Ce moyen de stockage peut être intégré au système de communication ou bien apte à lui être relié.

Ensuite, on définit les transformations, chaque transformation étant affectée à au moins une fréquence de réception précédemment saisie et chaque fréquence de réception étant associée à une seule transformation. Chaque transformation sera appliquée, lors de la phase d'utilisation, à chaque signal vocal d'entrée correspondant à la ou les fréquences de réception associées à cette transformation.

Afin de définir ces transformations, on sélectionne chaque transformation parmi une liste de transformations stockées dans le moyen de stockage du système de communication. Ensuite on peut ajuster, si nécessaire, cette transformation par l'intermédiaire d'un moyen de réglage dédié pour l'adapter à chaque utilisateur du système de communication, améliorant ainsi la différenciation des voix modifiées par cette transformation par rapport aux autres voix transformées. En effet, la sensibilité aux différents sons peut varier d'un utilisateur à l'autre. Il est alors intéressant de pouvoir ajuster chaque transformation afin de l'adapter à cette sensibilité de l'utilisateur.

On peut par exemple modifier le volume sonore ou bien une ou plusieurs fréquences de la voix correspondant au signal vocal d'entrée concernée par cette transformation. Ce moyen de réglage dédié peut être intégré au système de communication ou bien être apte à lui être relié.

Enfin, on enregistre ces fréquences de réception et les transformations associées dans une base de données dédiée. Cette base de données est stockée dans le moyen de stockage.

Cette étape permet donc de définir l'ensemble des fréquences de réception correspondant aux signaux vocaux d'entrée susceptibles d'être réceptionnés par le système de communication ainsi que l'ensemble des transformations associées à ces signaux vocaux d'entrée.

Selon un premier mode de réalisation du procédé, au moins une transformation est constituée par un filtre numérique. Le signal numérique transformé ainsi obtenu est selon l'équation

$$y_i(n) = \sum_{k=0}^{k=n-1} a_{ik} \cdot y_i(n-k) + \sum_{k=0}^{k=n-1} b_{ik} \cdot x_i(n-k),$$ dans laquelle $x_i(n)$ est le signal numérique d'entrée et $y_i(n)$ le

signal numérique transformé. $i$ et $n$ sont des nombres entiers, $i$ correspondant à un numéro du signal vocal d'entrée $x_i$ et $n$ au rang d'une valeur du signal numérique parmi la succession des valeurs discontinues formant ce signal numérique. Les coefficients $a_{ik}$ et $b_{ik}$ sont définis afin de modifier au moins une caractéristique de la voix correspondant au signal vocal d'entrée et sont spécifiques à chaque transformation $T_i$.

Par exemple, au moins une transformation est constituée par un filtre numérique à réponse impulsionnelle finie. Le signal numérique transformé ainsi obtenu est selon l'équation $y_i(n)=x_i(n)+\alpha.x_i(n-K)$. Les coefficients $\alpha$ et $K$ sont définis afin de modifier au moins une caractéristique de la voix correspondant au signal vocal d'entrée, $K$ étant un nombre entier.

Selon un autre exemple, au moins une transformation est constituée par un filtre numérique à réponse impulsionnelle infinie. Le signal numérique transformé ainsi obtenu est selon l'équation $y_i(n)=x_i(n)+\alpha.y_i(n-K)$. Les coefficients $\alpha$ et $K$ sont définis afin de modifier au moins une caractéristique de la voix correspondant au signal vocal d'entrée, $K$ étant un nombre entier.

Selon un second mode de réalisation du procédé, au moins une transformation est constituée par un module de traitement permettant de modifier le signal vocal d'entrée selon un principe connu et généralement dénommé en langue anglaise « Pitch Shifting ». Il s'agit d'un effet qui a pour but de modifier au moins un son constituant la voix de l'interlocuteur d'au moins une octave sans modifier la durée de ce son.

En effet, lorsque l'on décale un son d'une octave vers le haut, c'est-à-dire pour obtenir un son plus aigu, la durée de ce son est normalement réduite et divisée par deux. Par contre, le « pitch-shifting » permet de jouer un son à une octave différente sans en modifier la durée. Une telle transformation est plus facile à réaliser sur un signal numérique que sur un signal analogique. La voix correspondant à ce signal d'entrée est ainsi plus facile à distinguer parmi d'autres voix.

Selon un troisième mode de réalisation du procédé, au moins une transformation est constituée par un module de traitement également connu et dénommé « Vocodeur », contraction de la désignation en langue anglaise « voice coder » signifiant « codeur de voix ». Ce Vocodeur est un procédé de traitement d'un signal sonore permettant d'analyser les principales composantes spectrales d'une voix et de fabriquer une voix synthétique à partir du résultat de cette analyse et selon les caractéristiques d'un signal porteur associé à ce module de traitement et définissant la transformation.

Certains Vocodeurs permettent par exemple de déplacer les fréquences d'une voix, de sorte que cette voix devienne totalement déformée et méconnaissable, tout en restant parfaitement compréhensible. Cette technique est notamment utilisée pour rendre anonyme un interlocuteur.

Chacune de ces transformations permet de préserver un rapport signal à bruit et des propriétés garantissant l'intelligibilité des voix réceptionnées simultanément.

La présente invention a aussi pour objet un système de communication. Un tel système de communication comprend au moins un moyen de réception apte à recevoir une pluralité de signaux vocaux d'entrée, chaque signal vocal d'entrée étant réceptionné à une fréquence de réception spécifique. Un tel système dispose également d'au moins un moyen d'émission afin d'émettre des signaux vocaux de sortie vers d'autres interlocuteurs et au moins une unité de traitement ainsi qu'au moins un moyen de stockage.

L'unité de traitement du système de communication comporte un moyen de calcul qui exécute des instructions mémorisées au sein du moyen de stockage pour transformer chaque signal vocal d'entrée en fonction de sa fréquence de réception afin d'optimiser la perception par un utilisateur du système de communication des voix de ses interlocuteurs qui correspondent à ces signaux vocaux d'entrée réceptionnés simultanément.

Dans un mode de réalisation du système selon l'invention, le système de communication comporte au moins un moyen de saisie pour saisir les fréquences de réception et sélectionner les transformations parmi une liste de transformations stockées dans le moyen de stockage. Ensuite, le système de communication permet d'affecter chaque transformation à au moins une des fréquences de réception saisies. Enfin, ces fréquences de réception et les transformations associées sont stockées dans le moyen de stockage.

Dans un mode de réalisation de l'invention, le système de communication comporte au moins un moyen de réglage pour ajuster les transformations. La voix transformée peut ainsi être adaptée à chaque utilisateur du système de communication, améliorant ainsi la différenciation des voix modifiées par cette transformation par rapport aux autres voix transformées.

Dans un autre mode de réalisation de l'invention, le système de communication comporte au moins un convertisseur analogique-numérique pour convertir les signaux vocaux d'entrée en signaux numériques avant de leur appliquer la transformation associée. Le système de communication comporte également au moins un convertisseur numérique-analogique pour convertir les signaux numériques transformés par la transformation en signaux vocaux analogiques transformés. Le convertisseur analogique-numérique et le convertisseur numérique-analogique peuvent être constitués par le même convertisseur, un Codec par exemple afin de simplifier le système.

L'invention et ses avantages apparaîtront avec plus de détails dans le cadre de la description qui suit avec des exemples de réalisation donnés à titre illustratif en référence aux figures annexées qui représentent :

- la figure 1, un schéma synoptique du procédé selon l'invention,

- la figure 2, un système de communication selon l'invention, et

- la figure 3, un principe de transformation des signaux vocaux d'entrée.

Les éléments présents dans plusieurs figures distinctes sont affectés d'une seule et même référence.

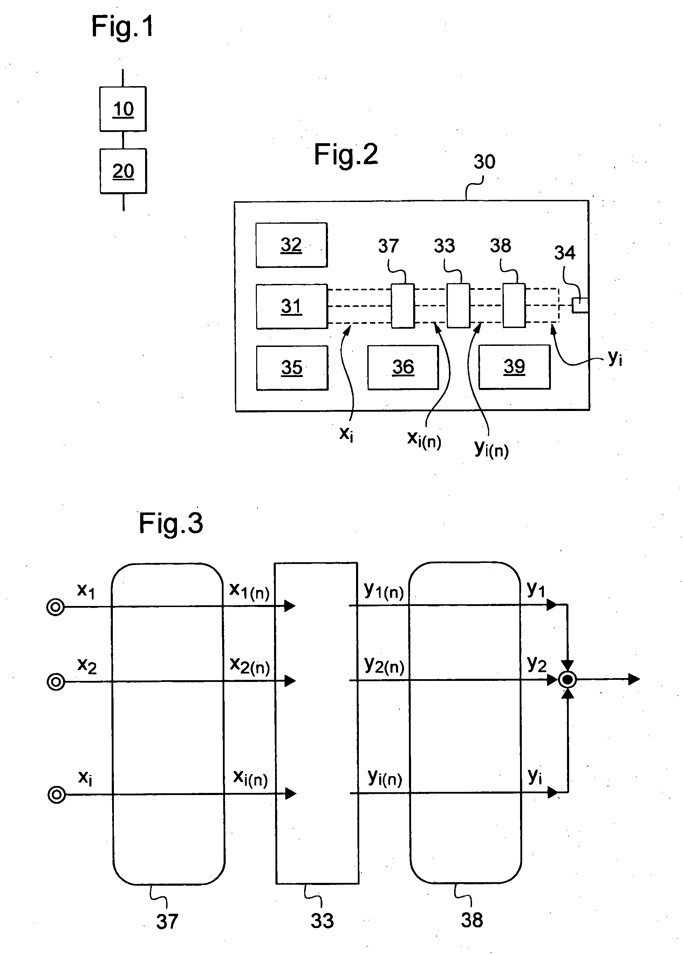

La figure 1 représente le schéma synoptique du procédé de transformation selon l'invention, comportant deux étapes, une phase d'initialisation 10 et d'une phase d'utilisation 20.

La figure 2 représente un système de communication comportant un moyen de réception 31, un moyen d'émission 32 et une unité de traitement 33.

Le moyen de réception 31 est apte à recevoir une pluralité de signaux vocaux d'entrée $x_i$, chaque signal vocal d'entrée $x_i$ étant réceptionné à une fréquence de réception spécifique $F_i$ et correspondant à une voix d'un interlocuteur d'un utilisateur du système de communication 30.

Le système de communication 30 comporte également un moyen de stockage 35, un moyen de saisie 36 et un moyen de réglage 39.

Selon le procédé de l'invention, lors de la phase d'initialisation 10, on affecte au moins deux transformations $T_i$ aux signaux vocaux d'entrée, chaque transformation $Ti$ étant associée à au moins une fréquence de réception $F_i$ et étant distincte des autres transformations,

Puis, lors de la phase d'utilisation 20, on applique simultanément ces transformations $T_i$ aux signaux vocaux d'entrée $x_i$ de fréquence de réception $F_i$ correspondante, transformant ainsi chaque signal vocal d'entrée $x_i$ afin d'optimiser la perception de la voix de l'interlocuteur par l'utilisateur.

Pour cela, l'unité de traitement 33 du système de communication 30 comporte un moyen de calcul exécutant des instructions mémorisées au sein du moyen de stockage 35 pour transformer chaque signal vocal d'entrée $x_i$. Ensuite, chaque signal vocal transformé $y_i$ est dirigé vers une sortie 34 du système de communication 30 pour être transmis, par exemple, à un casque de l'utilisateur de ce système de communication 30.

La voix de l'interlocuteur est ainsi modifié artificiellement, au moins une des caractéristiques de la voix telles que son volume sonore ou ses fréquences étant modifiée.

Lors de cette phase d'initialisation 10, on saisit lesdites fréquences de réception $F_i$ des signaux vocaux d'entrée $x_i$ par l'intermédiaire du moyen de saisie 36, puis on sélectionne la transformation $T_i$ affectée à chaque fréquence de réception $F_i$ parmi une liste de transformations stockée dans le moyen de stockage 35, $i$ étant un nombre entier correspond à un numéro du signal vocal d'entrée $x_i$.

Ensuite, on enregistre ces fréquences de réception $F_i$ et les transformations $T_i$ associées dans une base de données dédiée stockée dans un moyen de stockage 35.

Il est également possible d'ajuster cette transformation $T_i$ par l'intermédiaire du moyen de réglage 39. Ceci permet notamment d'adapter la transformation $T_i$ à chaque utilisateur afin d'optimiser la différenciation des voix transformées et réceptionnées simultanément.

Lors de la phase d'utilisation 20, on peut appliquer à chaque signal vocal d'entrée $x_i$ la transformation $T_i$ associée à la fréquence de réception $F_i$ du signal vocal d'entrée $x_i$, obtenant ainsi un signal vocal transformé $y_i$.

De préférence, lors de la phase d'utilisation 20, on applique chaque transformation à un signal numérique $x_i(n)$. La figure 3 représente des convertisseurs analogique-numérique 37 et numérique-analogique 38 présents dans le système de communication 30. Pour cela, on convertit, par l'intermédiaire du convertisseur analogique-numérique 37, les signaux vocaux d'entrée $x_i$ en signaux numériques $x_i(n)$, $n$ étant un nombre entier correspondant au rang d'une valeur du signal numérique parmi la succession des valeurs discontinues formant ce signal numérique.

Ensuite, on peut appliquer à chaque signal numérique $x_i(n)$ la transformation $T_i$ associée à la fréquence de réception $F_i$ du signal vocal d'entrée $x_i$, par l'intermédiaire d'une unité de traitement 33, obtenant ainsi le signal numérique

transformé $y_i(n)$.

Enfin, on convertit ces signaux numériques transformés $y_i(n)$ en signaux vocaux analogiques transformés $y_i$ par l'intermédiaire d'un convertisseur numérique-analogique 38 présent dans le système de communication 30.

Dans un mode de réalisation préféré de l'invention, le convertisseur analogique-numérique 37 est constitué par un Codec et le convertisseur numérique-analogique 38 est également constitué par le même Codec.

Un signal numérique est composé d'une succession de valeurs discontinues alors qu'un signal analogique est composé d'une valeur variant de façon continue. Il est alors plus facile d'appliquer des transformations à des valeurs discontinues, c'est à dire un signal numérique, qu'à une valeur continue, c'est à dire un signal analogique.

Cependant, selon une variante de l'invention, chaque transformation peut être appliquée sur des signaux analogiques, mais avec des performances moindres.

Les transformations $T_i$ applicables au signal numérique $x_i(n)$ peuvent être constituées par un filtre numérique permettant d'obtenir un signal numérique transformé $y_i(n)$ selon l'équa-

$$\text{tion } y_i(n) = \sum_{k=0}^{k=n-1} a_{ik} \cdot y_i(n-k) + \sum_{k=0}^{k=n-1} b_{ik} \cdot x_i(n-k).$$ $i$ est un nombre entier correspondant au numéro du signal vocal d'entrée $x_i$ et $n$ est un nombre entier correspondant au rang de la valeur du signal numérique parmi la succession des valeurs discontinues formant ce signal numérique et les coefficients $a_{ik}$ et $b_{ik}$, spécifiques à chaque transformation $T_i$, sont définis afin de modifier au moins une desdites caractéristiques de ladite voix dudit interlocuteur.

Par exemple, une transformation $T_i$ peut être un filtre numérique à réponse impulsionnelle finie permettant d'obtenir un signal numérique transformé $y_i(n)$ selon l'équation $y_i(n)=x_i(n)+\alpha.x_i(n-K)$, $\alpha$ et K étant définis afin de modifier au moins une desdites caractéristiques de ladite voix dudit interlocuteur, $K$ étant un nombre entier.

De même, une transformation $T_i$ peut être constituée par un filtre numérique à réponse impulsionnelle infinie permettant d'obtenir un signal numérique transformé $y_i(n)$ selon l'équation $y_i(n)=x_i(n)+\alpha,y_i(n-K)$, $\alpha$ et $K$ étant définis afin de modifier au moins une desdites caractéristiques de ladite voix dudit interlocuteur, $K$ étant un nombre entier.

Selon un mode de réalisation de l'invention, une transformation $T_i$ peut être constituée par un module de traitement permettant de modifier au moins un son de ladite voix d'au moins une octave sans modifier la durée de ce son.

Selon un autre mode de réalisation de l'invention, une transformation $T_i$ peut être constituée par un module de traitement permettant d'analyser au moins une composante spectrale de ladite voix et de fabriquer une voix synthétique à partir du résultat de cette analyse et selon des caractéristiques d'un signal porteur associé à ce module de traitement.

Chacune de ces transformations permet de préserver un rapport signal à bruit et des propriétés garantissant l'intelligibilité des voix réceptionnées simultanément.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, défini par les revendications.

**Revendications**

**1.** Procédé de transformation simultanée d'au moins deux signaux vocaux d'entrée $x_i$ d'un système de communication (30), chaque signal vocal d'entrée $x_i$ étant réceptionné à une fréquence de réception spécifique $F_i$ et correspondant à une voix d'un interlocuteur d'un utilisateur dudit système de communication (30), $i$ étant un nombre entier correspondant à un numéro dudit signal vocal d'entrée $x_i$,

au cours duquel :

- lors d'une phase d'initialisation (10), on affecte au moins deux transformations $T_i$ auxdits signaux vocaux d'entrée, chaque transformation étant associée à au moins une fréquence de réception $F_i$ desdits signaux vocaux d'entrée $x_i$ et étant distincte des autres transformations,
- lors d'une phase d'utilisation (20), on applique simultanément lesdites transformations $T_i$ auxdits signaux vocaux d'entrée $x_i$ de fréquence de réception $F_i$, transformant ainsi chaque signal vocal d'entrée $x_i$ afin d'optimiser la perception et la discrimination de ladite voix de chaque interlocuteur par ledit utilisateur en modifiant au moins une caractéristique de ladite voix, lesdites caractéristiques étant le volume sonore pour une première voix correspondant à un premier signal vocal d'entrée selon une première fréquence de réception et les fréquences pour une seconde voix correspondant à un second signal vocal d'entrée selon une seconde fréquence de réception afin de permettre audit utilisateur de se concentrer sur ladite voix d'un interlocuteur susceptible de fournir un message important.

**2.** Procédé selon la revendication 1,
**caractérisé en ce que**, lors de ladite phase d'initialisation (10) :

- on saisit chaque fréquence de réception $F_i$ desdits signaux vocaux d'entrée $x_i$ par l'intermédiaire d'un moyen de saisie (36),
- on définit chaque transformation $T_i$ affectée à au moins une fréquence de réception $F_i$, et
- on enregistre lesdites fréquences de réception $F_i$ et lesdites transformations $T_i$ associées dans une base de données dédiée stockée dans un moyen de stockage (35).

**3.** Procédé selon l'une quelconque des revendications 1 à 2,
**caractérisé en ce que**, lors de ladite phase d'initialisation (10), pour définir chaque transformation $T_i$ :

- on sélectionne ladite transformation $T_i$ parmi une liste de transformations stockée dans ledit moyen de stockage (35), et
- on ajuste ladite transformation $T_i$ par l'intermédiaire d'un moyen de réglage dédié (39).

**4.** Procédé selon l'une quelconque des revendications 1 à 3,
**caractérisé en ce que**, lors de ladite phase d'utilisation (20), on applique à chaque signal vocal d'entrée $x_i$ ladite transformation $T_i$ associée à ladite fréquence de réception $F_i$ dudit signal vocal d'entrée $x_i$, obtenant ainsi un signal vocal transformé $y_i$,

**5.** Procédé selon l'une quelconque des revendications 1 à 4, **caractérisé en ce que**, lors de ladite phase d'utilisation (20) :

- on convertit lesdits signaux vocaux analogiques d'entrée $x_i$ en signaux numériques $x_i(n)$ composées d'une succession de valeurs discontinues par l'intermédiaire d'un convertisseur analogique-numérique (37), $n$ étant un nombre entier correspondant au rang d'une valeur dudit signal numérique $x_i(n)$ parmi ladite succession de valeurs discontinues,
- on applique à chaque signal numérique $x_i(n)$ ladite transformation $T_i$ associée à ladite fréquence de réception $F_i$ dudit signal vocal d'entrée $x_i$, par l'intermédiaire d'une unité de traitement (33), obtenant ainsi un signal numérique transformé $y_i(n)$,
- on convertit lesdits signaux numériques transformés $y_i(n)$ en signaux vocaux analogiques transformés $y_i$ par l'intermédiaire d'un convertisseur numérique-analogique (38).

**6.** Procédé selon la revendication 5,
**caractérisé en ce que** ledit convertisseur analogique-numérique (37) est constitué par un Codec et ledit convertisseur numérique-analogique (38) est également constitué par ledit Codec.

**7.** Procédé selon l'une quelconque des revendications 5 à 6,
**caractérisé en ce qu'**au moins une transformation $T_i$ peut être constituée par un filtre numérique permettant d'obtenir un signal numérique transformé $y_i(n)$ selon l'équation $y_i(n) = \sum_{k=0}^{k=n-1} a_{ik}.y_i(n-k) + \sum_{k=0}^{k=n-1} b_{ik}.x_i(n-k)$, $i$ étant un nombre entier correspondant à un numéro dudit signal vocal d'entrée $x_i$ et $n$ étant un nombre entier correspondant au rang d'une valeur dudit signal numérique $x_i(n)$ parmi ladite succession de valeurs discontinues, $a_{ik}$ et $b_{ik}$ étant spécifiques à chaque transformation $T_i$ et définis afin de modifier au moins une desdites caractéristiques de ladite voix dudit interlocuteur.

**8.** Procédé selon l'une quelconque des revendications 5 à 7,
**caractérisé en ce qu'**au moins une transformation $T_i$ peut être constituée par un filtre numérique à réponse impulsionnelle finie permettant d'obtenir un signal numérique transformé $y_i(n)$ selon l'équation $y_i(n) = x_i(n) + \alpha.x_i(n-K)$, $\alpha$ et $K$ étant définis afin de modifier au moins une desdites caractéristiques de ladite voix dudit interlocuteur, $K$ étant un nombre entier.

**9.** Procédé selon l'une quelconque des revendications 5 à 8,
**caractérisé en ce qu'**au moins une transformation $T_i$ peut être constituée par un filtre numérique à réponse impulsionnelle infinie permettant d'obtenir un signal numérique transformé $y_i(n)$ selon l'équation $y_i(n) = x_i(n) + \alpha.y_i(n-K)$, $\alpha$

et K étant définis afin de modifier au moins une desdites caractéristiques de ladite voix dudit interlocuteur, *K* étant un nombre entier.

10. Procédé selon l'une quelconque des revendications 4 à 9,
**caractérisé en ce qu'a**u moins une transformation $T_i$ peut être constituée par un module de traitement permettant de modifier au moins un son de ladite voix d'au moins une octave sans modifier la durée de ce son.

11. Procédé selon l'une quelconque des revendications 5 à 10,
**caractérisé en ce qu'a**u moins une transformation $T_i$ peut être constituée par un module de traitement permettant d'analyser au moins une composante spectrale de ladite voix et de fabriquer une voix synthétique à partir du résultat de cette analyse et selon des caractéristiques d'un signal porteur associé à ce module de traitement.

12. Système de communication (30), comprenant :

- au moins un moyen de réception (31) apte à recevoir une pluralité de signaux vocaux d'entrée $x_i$, chaque signal vocal d'entrée $x_i$ étant réceptionné à une fréquence de réception spécifique $F_i$, et correspondant à une voix d'un interlocuteur d'un utilisateur dudit système de communication (30), *i* étant un nombre entier correspondant à un numéro dudit signal vocal d'entrée $x_i$
- au moins un moyen d'émission (32), et
- au moins une unité de traitement (33),

**caractérisé en ce que** ledit système de communication (30) comporte au moins un moyen de stockage (35) dans lequel sont enregistrées des transformations $T_i$ associées aux fréquences de réception $F_i$ desdits signaux vocaux d'entrée, chaque transformation étant associée à au moins une fréquence de réception $F_i$ et étant distincte des autres transformations, ladite unité de traitement (33) comportant un moyen de calcul exécutant des instructions mémorisées au sein dudit moyen de stockage (35) pour transformer chaque signal vocal d'entrée $x_i$ afin d'optimiser la perception et la discrimination de ladite voix de chaque interlocuteur par ledit utilisateur en modifiant au moins une caractéristique de ladite voix, lesdites caractéristiques étant le volume sonore pour une première voix correspondant à un premier signal vocal d'entrée selon une première fréquence de réception et les fréquences pour une seconde voix correspondant à un second signal vocal d'entrée selon une seconde fréquence de réception afin de permettre audit utilisateur de se concentrer sur ladite voix d'un interlocuteur susceptible de fournir un message important.

13. Système de communication (30) selon la revendication 12,
**caractérisé en ce que** ledit système de communication (30) comporte au moins un moyen de saisie (36) pour saisir lesdites fréquences de réception $F_i$, sélectionner lesdites transformations $T_i$ parmi une liste de transformations stockées dans ledit moyen de stockage (35) et affecter chaque transformation $T_i$ à au moins une fréquence de réception $F_i$, lesdites fréquences $F_i$ et lesdites transformations $T_i$ associées étant stockées dans ledit moyen de stockage (35).

14. Système (30) selon l'une quelconque des revendications 1 à 13,
**caractérisé en ce que** ledit système de communication (30) comporte au moins un moyen de réglage (39) pour ajuster lesdites transformations $T_i$.

15. Système (30) selon l'une quelconque des revendications 12 à 14,
**caractérisé en ce que** ledit système de communication (30) comporte au moins un convertisseur analogique-numérique (37) pour convertir lesdits signaux vocaux d'entrée $x_i$ en signaux numériques $x_i(n)$ composées d'une succession de valeurs discontinues avant de leur appliquer ladite transformation $T_i$ les transformant en signal numérique transformé $y_i(n)$, et au moins un convertisseur numérique-analogique (38) pour convertir lesdits signaux numériques transformés $y_i(n)$ par ladite transformation $T_i$ en signaux vocaux analogiques transformés $y_i$, *n* étant un nombre entier correspondant au rang d'une valeur dudit signal numérique $x_i(n)$ parmi ladite succession de valeurs discontinues.

**Patentansprüche**

1. Simultanes Umwandlungsverfahren mindestens zweier Eingangssprachsignale $x_i$ eines Kommunikationssystems (30), wobei jedes Eingangssprachsignal $x_i$ bei einer spezifischen Empfangsfrequenz $F_i$ empfangen wird und einer Stimme eines Gesprächspartners eines Anwenders des Kommunikationssystems (30) entspricht, wobei i eine ganze Zahl ist, die einer Nummer des Eingangssprachsignals $x_i$ entspricht,
in dessen Verlauf:

- während einer Initialisierungsphase (10) mindestens zwei Umwandlungen Ti den Eingangssprachsignalen zugeordnet werden, wobei jede Umwandlung mindestens einer Empfangsfrequenz Fi der Eingangssprachsignale $x_i$ zugeordnet ist und von den anderen Umwandlungen verschieden ist,
- während einer Anwendungsphase (20) die Umwandlungen $T_i$ simultan bei den Eingangssprachsignalen $x_i$ mit der Empfangsfrequenz $F_i$ angewendet werden, wodurch somit jedes Eingangssprachsignal $x_i$ umgewandelte wird, um die Wahrnehmung und die Unterscheidung der Stimme eines jeden Gesprächspartners durch den Anwender zu optimieren, indem mindestens eine Charakteristik der Stimme verändert wird, wobei die Charakteristika die Lautstärke für eine erste Stimme, die einem ersten Eingangssprachsignal gemäß einer ersten Empfangsfrequenz entspricht, und die Frequenzen für eine zweite Stimme, die einem zweiten Eingangssprachsignal gemäß einer zweiten Empfangsfrequenz entspricht, sind, um es dem Anwender zu ermöglichen, sich auf die Stimme eines Gesprächspartners zu konzentrieren, der eine wichtige Nachricht mitteilen kann.

2. Verfahren nach Anspruch 1,
**dadurch gekennzeichnet, dass** während der Initialisierungsphase (10):

- jede Empfangsfrequenz $F_i$ der Eingangssprachsignale $x_i$ mittels einer Eingabeeinrichtung (36) empfangen wird,
- jede Umwandlung $T_i$, die mindestens einer Empfangsfrequenz $F_i$ zugeordnet ist, definiert wird, und
- die Empfangsfrequenzen $F_i$ und die zugehörigen Umwandlungen $T_i$ in einer dafür vorgesehenen Datenbank, die in einem Speichermittel (35) gespeichert ist, registriert werden.

3. Verfahren nach einem der Ansprüche 1 bis 2,
**dadurch gekennzeichnet, dass** während der Initialisierungsphase (10) zum Definieren einer jeden Umwandlung $T_i$:

- die Umwandlung $T_i$ aus einer in dem Speichermittel (35) gespeicherten Liste von Umwandlungen ausgewählt wird, und
- die Umwandlung $T_i$ mittels eines dafür vorgesehenen Einstellmittels (39) eingestellt wird.

4. Verfahren nach einem der Ansprüche 1 bis 3,
**dadurch gekennzeichnet, dass** während der Anwendungsphase (20) auf jedes Eingangssprachsignal $x_i$ die Umwandlung $T_i$, die verbunden ist mit der Empfangsfrequenz $F_i$ die Umwandlung $T_i$ des Eingangssprachsignals $x_i$ angewendet wird, wodurch somit ein umgewandeltes Sprachsignal $y_i$ erhalten wird.

5. Verfahren nach einem der Ansprüche 1 bis 4,
**dadurch gekennzeichnet, dass** während der Anwendungsphase (20):

- die analogen Eingangssprachsignale $x_i$ in digitale Signale $x_i(n)$ umgewandelt werden, die aus einer Folge von diskreten Werten bestehen, mittels eines Analog-Digital-Wandlers (37), wobei eine ganze Zahl ist, die dem Rang eines Wertes des digitalen Signals $x_i(n)$ in der Folge von diskreten Werten entspricht,
- auf jedes digitale Signal $x_i(n)$ die Umwandlung $T_i$, die mit der Empfangsfrequenz $F_i$ des Eingangssprachsignals $x_i$ verknüpft ist, mittels einer Verarbeitungseinheit (33) angewendet wird, wodurch somit ein umgewandeltes digitales Signal $y_i(n)$ erhalten wird,
- die umgewandelten numerischen Signale $y_i(n)$ mittels eines Digital-Analog-Wandlers (38) in umgewandelte analoge Sprachsignale $y_i$ umgewandelt werden.

6. Verfahren nach Anspruch 5,
**dadurch gekennzeichnet, dass** der Analog-Digital-Wandler (37) aus einem Coder-Decoder besteht und der Digital-Analog-Wandler (38) ebenfalls aus dem Coder-Decoder besteht.

7. Verfahren nach einem der Ansprüche 5 bis 6,
**dadurch gekennzeichnet, dass** mindestens eine Umwandlung $T_i$ aus einem Digitalfilter besteht, der es erlaubt, ein umgewandeltes Digitalsignal $y_i(n)$ gemäß der Gleichung

$$y_i(n) = \sum_{k=0}^{k=a-1} a_{ik} \cdot y_i(n-k) + \sum_{k=0}^{k=m-1} b_{ik} \cdot x_i(n-k)$$

zu erhalten, wobei i eine ganze Zahl ist, die einer Nummer des Eingangssprachsignals $x_i$ entspricht, und n eine ganze Zahl ist, die dem Rang eines Wertes des Digitalsignals $x_i(n)$ unter der Folge diskreter Werte entspricht, wobei $a_{ik}$ und $b_{ik}$ spezifische Werte einer jeden Umwandlung $T_i$ sind und die definiert sind, um mindestens eines der genannten Charakteristika der Stimme des Gesprächspartners zu verändern.

8. Verfahren nach einem der Ansprüche 5 bis 7,
**dadurch gekennzeichnet, dass** mindestens eine Umwandlung $T_i$ aus einem endlichen Impulsantwort-Digitalfilter bestehen kann, der es erlaubt, ein umgewandeltes Digitalsignal $y_i(n)$ gemäß der Gleichung $y_i(n) = x_i(n) + \alpha.x_i(n-K)$ zu erhalten, wobei $\alpha$ und K definiert sind, um mindestens eine der genannten Charakteristika der Stimme des Gesprächspartners zu ändern, wobei K eine ganze Zahl ist.

9. Verfahren nach einem der Ansprüche 5 bis 8,
**dadurch gekennzeichnet, dass** mindestens eine Umwandlung $T_i$ aus einem unendlichen Impulsantwort-Digitalfilter bestehen kann, der es erlaubt, ein umgewandeltes Digitalsignal $y_i(n)$ gemäß der Gleichung $y_i(n) = x_i(n) + \alpha.y_i(n-K)$, wobei $\alpha$ und K definiert sind, um mindestens eine der genannten Charakteristika der Stimme des Gesprächspartners zu ändern, wobei K eine ganze Zahl ist.

10. Verfahren nach einem der Ansprüche 4 bis 9,
**dadurch gekennzeichnet, dass** zumindest eine Umwandlung $T_i$ aus einem Verarbeitungsmodul bestehen kann, das es erlaubt, mindestens einen Klang der Stimme um mindestens eine Oktave zu verändern, ohne die Klangdauer zu ändern.

11. Verfahren nach einem der Ansprüche 5 bis 10,
**dadurch gekennzeichnet, dass** mindestens eine Umwandlung $T_i$ aus einem Verarbeitungsmodul bestehen kann, das es erlaubt, mindestens einen spektralen Bestandteil der Stimme zu analysieren und eine synthetische Stimme ausgehend von dem Ergebnis dieser Analyse und gemäß einem Trägersignal, das mit dem Verarbeitungsmodul verbunden ist, zu erzeugen.

12. Kommunikationssystem (30) mit:

- mindestens einem Empfangsmittel (31), welches eine Mehrzahl von Eingangssprachsignalen $x_i$ empfangen kann, wobei jedes Eingangssprachsignal $x_i$ bei einer spezifischen Empfangsfrequenz $F_i$ empfangen wird und einer Stimme eines Gesprächspartners eines Anwenders des Kommunikationssystems (30) entspricht, wobei i eine ganze Zahl ist, die einer Nummer des Eingangssprachsignals $x_i$ entspricht,
- mindestens einem Sendemittel (32) und
- mindestens einer Verarbeitungseinheit (33),

**dadurch gekennzeichnet, dass** das Kommunikationssystem (30) mindestens ein Speichermittel (35) aufweist, in dem Umwandlungen $T_i$ registriert sind, die mit Empfangsfrequenzen $F_i$ der Eingangssprachsignale verbunden sind, wobei jede Umwandlung mit mindestens einer Empfangsfrequenz Fi verbunden ist und von den anderen Umwandlungen verschieden ist, wobei die Verarbeitungseinheit (33) ein Rechenmittel aufweist, das in dem Speichermittel (35) gespeicherte Befehle ausführt, um jedes Eingangssprachsignal $x_i$ umzuwandeln, um die Wahrnehmung und die Unterscheidung der Stimme eines jeden Gesprächspartners durch den Anwender zu optimieren durch Verändern mindestens einer Charakteristik der Stimme, wobei die Charakteristika die Lautstärke für eine erste Stimme, die einem ersten Eingangssprachsignal gemäß einer ersten Empfangsfrequenz entspricht, und die Frequenzen für eine zweite Stimme, die einem zweiten Eingangssprachsignal gemäß einer zweiten Empfangsfrequenz entspricht, sind, um es dem Anwender zu erlauben, sich auf die Stimme eines Gesprächspartners zu konzentrieren, der eine wichtige Nachricht mitteilen kann.

13. Kommunikationssystem (30) nach Anspruch 12,
**dadurch gekennzeichnet, dass** das Kommunikationssystem (30) mindestens ein Erfassungsmittel (36) zum Erfassen der Empfangsfrequenzen $F_i$ aufweist, zum Auswählen der Umwandlungen $T_i$ aus einer Liste in dem Speichermittel (35) gespeicherter Umwandlungen und zum Zuweisen einer jeden Umwandlung $T_i$ mindestens einer

Empfangsfrequenz $F_i$, wobei die Frequenzen $F_i$ und die zugehörigen Umwandlungen $T_i$ in dem Speichermittel (35) gespeichert sind.

14. System (30) nach einem der Ansprüche 1 bis 13,
   **dadurch gekennzeichnet, dass** das Kommunikationssystem (30) mindestens ein Stellmittel (39) zum Einstellen der Umwandlungen $T_i$ aufweist.

15. System (30) nach einem der Ansprüche 12 bis 14,
   **dadurch gekennzeichnet, dass** das Kommunikati.onssystem (30) mindestens einen Analog-Digital-Wandler (37) aufweist zum Umwandeln der Eingangssprachsignale $x_i$ in digitale Signale $x_i(n)$, die zusammengesetzt sind aus einer Folge diskreter Werte, wobei, bevor auf sie die Umwandlung $T_i$ angewendet wird, sie in umgewandelte digitale Signale $y_i(n)$ umgewandelt werden, und mindestens einen Digital-Analog-Wandler (38), um die durch die Umwandlung $T_i$ umgewandelten digitalen Signale $y_i(n)$ in umgewandelte analoge Sprachsignale $y_i$ umzuwandeln, wobei n eine ganze Zahl ist, die dem Rang eines Wertes des digitalen Signals $x_i(n)$ in der besagten Folge diskreter Werte entspricht.

**Claims**

1. Method of simultaneously transforming at least two input voice signals $x_i$ of a communications system (30), each input voice signal $x_i$ being received at a specific reception frequency $F_i$ and corresponding to a voice of an interlocutor of a user of said communications system (30), $i$ being an integer corresponding to a number of said input voice signal $x_i$,
   in which method:

   - during an initialisation stage (10), at least two transformations $T_i$ are allocated to said input voice signals, each transformation $T_i$ being associated with at least one reception frequency $F_i$ of said input voice signals $x_i$ and being distinct from the other transformations,
   - during a utilisation stage (20), said transformations $T_i$ are applied simultaneously to said input voice signals $x_i$ of reception frequency $F_i$, thereby transforming each input voice signal $x_i$ in order to optimise the perception and the discrimination of said voice of each interlocutor by said user by modifying at least one characteristic of said voice, said characteristics being the sound volume for a first voice corresponding to a first input voice signal according to a first reception frequency and the frequencies for a second voice corresponding to a second input voice signal according to a second reception frequency in order to allow said user to concentrate on said voice of an interlocutor likely to deliver an important message.

2. Method according to claim 1,
   **characterised in that**, during said initialisation stage (10):

   - each reception frequency $F_i$ of said input voice signals $x_i$ is input via an input means (36),
   - each transformation $T_i$ allocated to at least one reception frequency $F_i$ is defined, and
   - said reception frequencies $F_i$ and said associated transformations $T_i$ are stored in a dedicated database stored in a storage means (35).

3. Method according to any one of claims 1 to 2,
   **characterised in that**, during said initialisation stage (10), in order to define each transformation $T_i$:

   - said transformation $T_i$ is selected from a list of transformations stored in said storage means (35), and
   - said transformation $T_i$ is adjusted via a dedicated adjustment means (39).

4. Method according any one of claims 1 to 3,
   **characterised in that**, during said utilisation stage (20), said transformation $T_i$ associated with said reception frequency $F_i$ of said input voice siqnal $x_i$ is applied to each input voice signal $x_i$, thereby obtaining a transformed voice signal $y_i$.

5. Method according to any one of claims 1 to 4,
   **characterised in that**, during said utilisation stage (20):

- said analog input voice signals $x_i$ are converted into digital signals $x_i(n)$ composed of a succession of discontinuous values by means of an analog-to-digital converter (37), $n$ being an integer corresponding to the rank of a value of said digital signal $x_i(n)$ in said succession of discontinuous values,
- said transformation $T_i$ associated with said reception frequency $F_i$ of said input voice signal $x_i$ is applied to each digital signal $x_i(n)$ by means of a processing unit (33), thereby obtaining a transformed digital signal $y_i(n)$,
- said transformed digital signals $y_i(n)$ are converted into transformed analog voice signals $y_i$ by means of a digital-to-analog converter (38).

6. Method according to claim 5,
   **characterised in that** said analog-to-digital converter (37) is constituted by a codec and said digital-to-analog converter (38) is also constituted by said codec.

7. Method according to any one of claims 5 to 6,
   **characterised in that** at least one transformation $T_i$ may be constituted by a digital filter enabling a transformed digital signal $y_i(n)$ to be obtained according to the equation

$$y_i(n) = \sum_{k=0}^{k=n-1} a_{ik} \cdot y_i(n-k) + \sum_{k=0}^{k=n-1} b_{ik} \cdot x_i(n-k)$$

   $i$ being an integer corresponding to a number of said input voice signal $x_i$ and $n$ being an integer corresponding to the rank of a value of said digital signal $x_i(n)$ in said succession of discontinuous values, $a_{ik}$ and $b_{ik}$ being specific to each transformation $T_i$ and being defined so as to modify at least one of said characteristics of said voice of said interlocutor.

8. Method according to any one of claims 5 to 7,
   **characterised in that** at least one transformation $T_i$ may be constituted by a digital filter of finite impulse response enabling a transformed digital signal $y_i(n)$ to be obtained according to the equation $y_i(n) = x_i(n) + \alpha.x_i(n - K)$, $\alpha$ and $K$ being defined so as to modify at least one of said characteristics of said voice of said interlocutor, $K$ being an integer.

9. Method according to any one of claims 5 to 8,
   **characterised in that** at least one transformation $T_i$ may be constituted by a digital filter of infinite impulse response enabling a transformed digital signal $y_i(n)$ to be obtained according to the equation $y_i(n) = x_i(n) + \alpha.y_i(n - K)$, $\alpha$ and $K$ being defined so as to modify at least one of said characteristics of said voice of said interlocutor, $K$ being an integer.

10. Method according to any one of claims 4 to 9,
    **characterised in that** at least one transformation $T_i$ may be constituted by a processing module enabling at least one sound of said voice to be modified by at least one octave without modifying the duration of the sound.

11. Method according to any one of claims 5 to 10,
    **characterised in that** at least one transformation $T_i$ may be constituted by a processing module enabling at least one spectral component of said voice to be analysed and a synthetic voice to be fabricated on the basis of the result of said analysis and depending on the characteristics of a carrier signal associated with said processing module.

12. Communications system (30), comprising:

    - at least one reception means (31) suitable for receiving a plurality of input voice signals $x_i$, each input voice signal $x_i$ being received at a specific reception frequency $F_i$, and corresponding to a voice of an interlocutor of a user of said communications system (30), $i$ being an integer corresponding to a number of said input voice signal $x_i$,
    - at least one transmission means (32), and
    - at least one processing unit (33),

    **characterised in that** said communications system (30) comprises at least one storage means (35) in which are stored transformations $T_i$ associated with the reception frequencies $F_i$ of said input voice signals, each transformation being associated with at least one reception frequency $F_i$ and being distinct from the other transformations, said processing unit (33) comprising a calculation means executing instructions stored in said storage means (35) to transform each input voice signal $x_i$ in order to optimise the perception and the discrimination of said voice of each interlocutor by said user by modifying at least one characteristic of said voice, said characteristics being the sound volume for a first voice corresponding to a first input voice signal according to a first reception frequency and the frequencies for a second voice corresponding to a second input voice signal according to a second reception frequency in order to allow said user to concentrate on said voice of an interlocutor likely to deliver an important message.

13. Communications system (30) according to claim 12,
**characterised in that** said communications system (30) comprises at least one input means (36) for inputting said reception frequencies $F_i$, selecting said transformations $T_i$ from a list of transformations stored in said storage means (35) and allocating each transformation $T_i$ to at least one reception frequency $F_i$, said frequencies $F_i$ and said associated transformations $T_i$ being stored in said storage means (35).

14. System (30) according to any one of claims 1 to 13,
**characterised in that** said communications system (30) comprises at least one adjustment means (39) for adjusting said transformations $T_i$.

15. System (30) according to any one of claims 12 to 14,
**characterised in that** said communications system (30) comprises at least one analog-to-digital converter (37) for converting said input voice signals $x_i$ into digital signals $x_i(n)$ composed of a succession of discontinuous values prior to applying said transformation $T_i$ thereto, transforming them into a transformed digital signal $y_i(n)$, and at least one digital-to-analog converter (38) for converting said transformed digital signals $y_i(n)$ transformed by said transformation $T_i$ into transformed analog voice signals $y_i$, $n$ being an integer corresponding to the rank of a value of said digital signal $x_i(n)$ in said succession of discontinuous values.

# Fig.1

10

20

# Fig.2

30

| 32 | | 37 | 33 | 38 | | 34 |

31

35 | 36 | 39

$x_i$

$x_{i(n)}$

$y_{i(n)}$

$y_i$

# Fig.3

$x_1$    $x_{1(n)}$    $y_{1(n)}$    $y_1$

$x_2$    $x_{2(n)}$    $y_{2(n)}$    $y_2$

$x_i$    $x_{i(n)}$    $y_{i(n)}$    $y_i$

37      33      38

## RÉFÉRENCES CITÉES DANS LA DESCRIPTION

**Documents brevets cités dans la description**

- US 5438623 A
- EP 2138009 A
- US 20020111796 A

**Littérature non-brevet citée dans la description**

- A review of the Cocktail Party effect. *the American Voice I/O Society,* 1992, vol. 12, 35-50
- Aesthetic and auditory enhancements for multi-stream information sonification. *Proceedings of the 3rd International Conference on Digital Interactive Media Entertainment and Arts,* 2008, 224-231
- Monitoring the simultaneous presentation of spatialized speech signals in a virtual acoustic environment. *Defense Technical Information center OAI-PMH Repository,* 01 Juin 1998